# EUROPEAN PATENT SPECIFICATION

(11) **EP 3 168 535 B1**
(45) Date of publication and mention of the grant of the patent: **17.03.2021**
(21) Application number: 15194429.5
(22) Date of filing: 13.11.2015
(51) Int. Cl.: F23R 3/20, F23R 3/36, F23R 3/28, F23R 3/16, F01D 5/18

(54) **AERODYNAMICALLY SHAPED BODY AND METHOD FOR COOLING A BODY PROVIDED IN A HOT FLUID FLOW**
AERODYNAMISCH GEFORMTER KÖRPER UND VERFAHREN ZUR KÜHLUNG EINES IN EINEM HEISSEN FLÜSSIGKEITSSTROM BEREITGESTELLTEN KÖRPERS
CORPS DE FORME AÉRODYNAMIQUE ET PROCÉDÉ DE REFROIDISSEMENT D'UN CORPS PLACÉ DANS UN ÉCOULEMENT DE FLUIDE CHAUD

(43) Date of publication of application: 17.05.2017
(73) Proprietor: Ansaldo Energia IP UK Limited, London W1G 9DQ (GB)
(72) Inventor: Baibuzenko, Igor, 129344 Moscow (RU); Mylnikov, Sergey, 127273 Moscow (RU); Petrunin, Dmitry, 111538 Moscow (RU); Stytsenko, Alexey, 109469 Moscow (RU); Maurer, Michael Thomas, 79713 Bad Säckingen (DE); Loeffel, Kaspar, 8049 Zürich (CH)
(74) Representative: Bernotti, Andrea

(56) References cited:
- EP-A1- 0 641 917
- EP-A1- 1 655 453
- EP-A1- 1 790 821
- EP-A1- 2 107 215
- EP-A2- 0 742 347
- EP-A2- 1 759 788
- EP-A2- 2 597 264
- WO-A1-2015/065718
- JP-A- S5 851 202
- US-A1- 2012 297 787
- US-A1- 2012 324 863

## Description

### TECHNICAL FIELD

The present disclosure relates to an aerodynamically shaped body as set forth in claim 1. It further relates to a method for cooling a body provided in a hot fluid flow as set forth in claim 9.

### BACKGROUND OF THE DISCLOSURE

It is known in the art to provide fuel injectors in a hot gas flow of a gas turbine engine. Such injectors may be typically used, while non-limiting, in a secondary combustor stage of a gas turbine engine with so-called sequential combustion as described for instance in EP 718 470. In this type of gas turbines, air is provided from a compressor to a combustion chamber where it is admixed with fuel which is combusted in the compressed air, is partially expanded, and further fuel is injected into the partly expanded still oxygen-rich flue gas from the preceding turbine. In such gas turbines, and there in particular in the subsequent combustors, the oxidant entering the combustor, that is, partly expanded flue gas, has a temperature in excess of a fuel auto-ignition temperature. That is, the fuel will after a certain ignition delay time, ignite spontaneously. It is thus crucial to achieve a complete and uniform fuel/oxidant mixture within a limited time frame before the fuel ignites. Fuel injector devices thus need to be placed directly in the hot fluid flow which is in excess of the auto-ignition temperature of the fuel, and are thus exposed to extreme temperatures. US 2012/0272659 for instance discloses a fuel injector device having a generally airfoil-like shape, with the airfoil trailing edge having an undulating shape across the flow direction, wherein the undulating aerodynamic cross section develops in a streamwise direction from the leading edge to the trailing edge of the generally airfoil-shaped body. Other exemplary instances of aerodynamically shaped fuel injector devices have become known from US 2012/0324863 and US 2012/0297777.

EP0641917 discloses as the leading edge of the turbine airfoil of a turbine blade for a gas turbine engine is cooled by utilizing helix shaped holes that are rectangular in cross-section and curved to produce film holes egressing at low angles adjacent the outer surface of the leading edge. The helix holes extend from the root to the tip of the blade and are parallelly and longitudinally spaced.

Other instances of aerodynamically shaped bodies may be running blade or stationary vane airfoils. Generally, such bodies extend along a camber line from a leading edge to a trailing edge and comprise a certain profile thickness and camber along their streamwise direction from the leading edge to the trailing edge. Generally, said bodies are shaped in a specific manner adapted to a flow around the body, and the skilled person will readily appreciate the location of the leading edge and the trailing edge. For instance, the body may exhibit a certain radius at the leading edge, while the trailing edge may be provided with a significantly smaller radius or even as an actually sharp edge. For another instance, at least for subsonic applications, the maximum profile thickness is generally located closer to the leading edge than to the trailing edge. In this respect, the skilled person will always readily recognize the intended main flow direction of such an aerodynamically shaped body.

Effective cooling is a key requirement for such devices if they are intended for use in a turbo engine hot working fluid flow. While for instance impingement cooling has proven an appropriate cooling method for leading edge cooling, it is related to significant high coolant pressure drops, and accordingly the supply of coolant needs to be provided at a correspondingly high pressure. In frequently applied cooling methods, the coolant is discharged into the working fluid flow around the body, and accordingly the coolant needs to be provided at a pressure accounting for the pressure of the working fluid at the discharge location plus said pressure drop.

### LINEOUT OF THE SUBJECT MATTER OF THE PRESENT DISCLOSURE

It is an object of the present disclosure to provide an aerodynamically shaped body for use in a hot fluid flow. In an aspect, the disclosed body is intended, adapted, configured and provided for use in the hot fluid flow path of a turboengine, and in particular of a gas turbine engine. In one aspect of the present disclosure the aerodynamically shaped body shall be disclosed such as to provide sufficient cooling of the body. In a more specific aspect, sufficient cooling for the leading edge shall be provided. In still a more specific aspect, the cooling shall be provided such as to be tied to a low coolant pressure drop, in particular when compared to impingement cooling. In a further aspect, the cooling shall be provided as homogeneous as possible, in particular at a leading edge and in particular along the span extent of the body. As will be appreciated, a span extent of the body is an extent along which the cross sections of the body, being defined by a camber line and the profile thickness, are staggered. It will be appreciated that the span extent may be straight in one aspect, but may in other aspects be curved, angled or otherwise shaped. It will be appreciated that the staggered cross sections may be identical or max differ from one cross section to an adjacent cross section. The body may be airfoil-shaped, in which case the leading edge and the trailing edge exhibit the shapes of general lines. In other aspects, the body may be, for instance drop-shaped or conical, in which case the leading edge and/or the trailing edge reduce to a rounded or pointed tip. In a specific aspect of the present disclosure the body is a fuel injector device. In a further more specific aspect of the present disclosure the body is a fuel injector device for use in a sequential combustion chamber of a gas turbine engine, that is, downstream at least one preceding combustion chamber and an expansion turbine.

In a further aspect, a method for cooling a body provided in a hot fluid flow shall be provided.

This is achieved by the subject matter set forth in claim 1, and further in the independent method claim 9.

Further effects and advantages of the disclosed subject matter, whether explicitly mentioned or not, will become apparent in view of the disclosure provided below. Accordingly, disclosed is an aerodynamically shaped body for use in a hot fluid flow, the body extending, in a cross sectional aspect thereof, along a camber line from a leading edge to a trailing edge. The body comprises at least one coolant supply plenum provided inside the body and in particular adjacent the leading edge. The coolant supply plenum is delimited towards the exterior of the body by a body wall, wherein the body wall extends from a first side of the camber line to a second side of the camber line and extends over the leading edge, thereby providing a leading edge wall section. The wall further comprises an inner surface facing the coolant supply plenum, and an outer surface. At least one first leading edge cooling duct extends from the inner surface to the outer surface and is in fluid communication with the coolant supply plenum through an inlet opening and opens out onto the outer surface through a discharge opening. The inlet opening is provided on a first side of the camber line, the discharge opening is provided on a second side of the camber line, and the cooling duct is provided inside the wall and extending inside the wall from the first side of the camber line to the second side of the camber line, and thereby crosses the camber line in a leading edge region of the wall. In particular embodiments, the at least one first leading edge cooling duct is provided in a cross-sectional aspect of the body, whereby said cross-sectional aspect is in particular taken at least essentially perpendicular to the span extent. Further, in particular embodiments, the at least one first leading edge cooling channel generally follows the leading edge contour of the body, and more in particular the outer contour of the body extending from the first side of the camber line to the second side of the camber line and over the leading edge.

The at least one cooling channel may be provided in a wall of the body closely following the outer contour of the body. Cooling channels of said type are frequently referred to in the art as near wall cooling channels. Cooling a body in guiding a coolant through said near wall cooling channels is frequently referred to as near wall cooling.

Accordingly, a method for cooling a body provided in a hot fluid flow comprises guiding a coolant flow from the coolant supply plenum to the outer surface of the body through the at least one first leading edge cooling duct, from the inlet opening to the discharge opening. More generally spoken, a method is disclosed for cooling a body provided in a hot fluid flow, the body extending along a camber line from a leading edge to a trailing edge, a body wall being provided extending from a first side of the camber line to a second side of the camber line and extending over the leading edge and thereby providing a leading edge wall section of the body. The wall comprises an outer surface exposed to the hot fluid flow. The method comprises providing at least one first leading edge coolant flow and guiding the first leading edge coolant flow through the wall, wherein the first leading edge coolant flow is guided inside the wall from the first side of the camber line to the second side of the camber line and thereby passes through the leading edge wall section of the body and crosses the camber line in a leading edge region.

In providing the leading edge cooling duct according to the present disclosure and in guiding a coolant through said cooling channels results in superior leading edge cooling while minimizing the coolant consumption. As opposed to, for instance, film cooling of the leading edge, a single coolant flow provided in a single cooling channel provides cooling for the entire leading edge region of the body in a cross sectional aspect of the body. To this extent a leading edge cooling duct may extend, from the inlet opening to the discharge opening, over an angle of at least 90 degrees and in more particular embodiments at least 120 degrees, at least 140 degrees, or at least 160 degrees. Accordingly, a leading edge coolant flow is guided along a curved flow path extending over at least said angles. Moreover, as the coolant is discharged downstream from the leading edge, the pressure at the discharge location is lower than the stagnation point pressure at or close to the leading edge. Thus, the coolant supply pressure requirement is lower compared to coolant techniques wherein the coolant is discharged at or close to the leading edge, as is the case for instance with film cooling of the leading edge. Turboengine efficiency may thus be enhanced.

In a more specific aspect of the method, the first leading edge coolant flow is provided to a first leading edge cooling duct, through which the first leading edge coolant flow is guided within the wall, from a coolant supply plenum provided inside the body and the first leading edge coolant flow is provided to the first leading edge cooling duct on the first side of the camber line and the first leading edge coolant flow is discharged on the outer surface of the wall and on the second side of the camber line. The leading edge coolant flow is provided from the coolant supply plenum.

In a further aspect of the herein disclosed subject matter, a second leading edge cooling duct is provided in fluid communication with the coolant supply plenum through an inlet opening in the inner surface of the wall and opens out onto the outer surface through a discharge opening, wherein the inlet opening is provided on the second side of the camber line, the discharge opening is provided on the first side of the camber line, and the second leading edge cooling duct is provided inside the wall and extending inside the wall from the second side of the camber line to the first side of the camber line and thereby crossing the camber line in a leading edge region. Further, in particular embodiments, the at least one second leading edge cooling duct generally follows the leading edge contour of the body, and more in particular the outer contour of the body spanning from the first side of the camber line to the second side of the camber line and over the leading edge.

The second leading edge cooling duct may be provided offset with respect to the first leading edge cooling duct along a leading edge extent, and/or a span extent, respectively, of the body. It is understood in this respect that the leading edge extent of the body follows a span extent of the body and may be understood as a line connecting all leading edge points of all cross sectional profiles, that is, the upstream point where the camber line penetrates the outer contour of the body in each cross section.

The method may, according to certain aspects, comprise providing at least one second leading edge coolant flow and guiding the second leading edge coolant flow through the wall from the second side of the camber line to the first side of the camber line and thereby passing through the leading edge wall section of the body and crossing the camber line in a leading edge region. In particular the second leading edge coolant flow may be provided at least essentially in a counterflow relationship to the first leading edge coolant flow. In particular aspects, the second leading edge coolant flow may be provided within a second leading edge cooling duct, the second cooling duct being offset from the first leading edge cooling duct along the extent of the leading edge, or the span extent, respectively. In this respect, the second leading edge coolant flow may enter the wall, or in more specific embodiments the at least one second leading edge cooling duct, on the second side of the camber line and be discharged on an outer surface of the body, or the wall, respectively, on the first side of the camber line.

Like a first leading edge cooling duct, a second leading edge cooling duct may extend, from the inlet opening to the discharge opening, over an angle of at least 90 degrees and in more particular embodiments at least 120 degrees, at least 140 degrees, or at least 160 degrees. Accordingly, a second leading edge coolant flow, like a first leading edge coolant flow, is guided along a curved flow path extending over at least said angles.

In further instances of the body, a multitude of first and second leading edge cooling ducts are arranged alternatingly along a span extent of the body, or along the leading edge extent, respectively.

Likewise, the method according to present disclosure may comprise providing a multitude of first and second leading edge coolant flows in respective leading edge cooling ducts which are offset with respect to each other along the extent of the leading edge, and wherein in particular the first and second leading edge coolant flows are provided alternatingly along the extent of the leading edge, or along the span extent of the body, respectively.

It is understood that providing second leading edge cooling ducts and second leading edge coolant flows enhances the effectiveness and evenness of the leading edge cooling. While a first leading edge coolant flow flows through a first leading edge cooling duct from the first side of the camber line to the second side of the camber line it takes heat from the leading edge wall section and thus heats up. Hence, the leading edge section of the wall on the second side of the camber line gets less intensely cooled by the first leading edge coolant flow. A second leading edge coolant flow flowing through a second leading edge cooling duct from the second side of the camber line to the first side of the camber line, however, provides, for the same reason, a more intense cooling for the leading edge section of the wall on the second side of the camber line than on the first side of the camber line. In providing, along the span of the body, an alternating arrangement of first and second leading edge cooling ducts and accordingly alternatingly providing first and second leading edge coolant flows, these effects get evened out, thus providing an overall homogeneous cooling of the leading edge wall section on both sides of the camber line. It is understood that to this extent the distance between two neighboring leading edge wall sections must not be too large. For instance, the material strength between a first leading edge cooling duct and a neighboring second leading edge cooling duct is ten times or less and in particular five times or less and more in particular three times or less the dimension of the cooling duct measured along the span direction of the body. For another instance, the material strength between a first leading edge cooling duct and a neighboring second leading edge cooling duct is less than twice the leading edge wall thickness and in particular does not exceed the leading edge wall thickness.

An alternating arrangement of first and second leading edge cooling ducts and accordingly an alternating provision of first and second leading edge cooling flows, wherein a second leading edge coolant flow is provided in a counterflow relationship to a first leading edge coolant flow provide a homogeneous cooling of the leading edge wall section of the body. As noted above, the wall thickness between neighboring first and second leading edge cooling ducts may be chosen not to exceed certain limits in order to provide a homogeneous cooling and to avoid hot spots in the leading edge wall section.

An inner surface of the leading edge wall section, which in particular delimits the coolant supply plenum on an upstream side of the body, may be undulating along a span extent of the aerodynamic body. The location of embossments corresponds to the location of a leading edge cooling duct. The embossments provide for sufficient space for the cross section of the cooling ducts, while the leading edge wall thickness of the body may otherwise be generally minimized. It is furthermore noted that, if the body is manufactured by an additive manufacturing process or layered additive manufacturing process, such as for instance selective laser melting or selective electron beam melting or any other 3-D printing method, manufacturing time and cost strongly correlate with the volume of the body to be manufactured. In providing the undulating inner surface, the volume to be manufactured is minimized while providing sufficient space for the cooling ducts.

It will be appreciated that the wall of the body as herein described comprises a first side wall section provided on the first side of the camber line and a second side wall section on the second side of the camber line. Each of said side wall sections exhibits an outer surface constituting a part of an outer surface of the body and extending from the leading edge wall section to the trailing edge. A side wall cooling duct may be provided in at least one of the first and second side wall sections, said cooling duct being in fluid communication with the coolant supply plenum through an inlet opening provided in an inner surface of the wall and extending to a discharge opening provided on an outer surface of the body, the discharge opening being located closer to the trailing edge than the inlet opening. In particular embodiments the discharge opening is located at least in a trailing edge region of the body, and may more particularly be located at the trailing edge. Further, the side wall cooling duct may in particular comprise a section inside the side wall section at least essentially following an outer contour of the body and further in particular along a main flow direction. It is understood that the main flow direction is a flow direction which extends from the leading edge to the trailing edge, following an outer contour of the body, and is thus clearly defined by the shape of the aerodynamic body.

To that extent, the method as herein described may in instances comprise providing a first side wall section of the body on the first side of the camber line and providing a second side wall section of the body on the second side of the camber line, each side wall section having an outer surface constituting a part of an outer surface of the body and extending from the leading edge wall section to the trailing edge. At least one side wall coolant flow is provided within at least one of said first and second side wall sections of the body. The side wall coolant flow is guided inside the side wall section in a downstream direction of the body. Said side wall coolant flow may be provided in a side wall cooling duct. The side wall coolant flow is provided through an inlet opening in the inner surface of the wall and is discharged on the outer surface of the wall, wherein the discharge location is provided closer to the trailing edge than the inlet location. The side wall coolant flow may be discharged at least essentially in a trailing edge region of the body and in particular at least essentially at the trailing edge. In more particular instances the side wall coolant flow may be guided inside the side wall along a flow path at least essentially following an outer contour of the body. Hence, cooling for the side walls of the body downstream the location of the leading edge cooling duct discharge openings may be provided.

A multitude of side wall cooling ducts and respective side wall coolant flows may be provided in side wall sections on the first and/or the second side of the camber line. The number of cooling ducts provided in each of the first and second side wall sections may be identical or may be different, dependent on the thermal loading of the side wall sections. Likewise, the number of side wall coolant flows provided on each of the first and second side of the camber line may be identical or may be different, dependent on the thermal loading of the side wall sections.

In yet a further aspect the body comprises a first multitude of leading edge cooling ducts and a second multitude of side wall cooling ducts, wherein the first multitude of leading edge cooling ducts outnumbers the second multitude of side wall cooling ducts provided within any of the first and second side wall sections. In other words, the total number of leading edge cooling ducts, that is, the sum of the number of first leading edge cooling ducts plus the number of second leading edge cooling ducts, is larger than the number of side wall cooling ducts provided in any one of the first and second side wall sections. The total number of side wall cooling ducts provided in both side wall sections, that is, the sum of the number of side wall cooling ducts provided in the first side wall section plus the number of side wall cooling ducts provided in the second side wall section, may, however, in certain embodiments at least essentially equal the total number of leading edge cooling ducts, that is, the sum of the number of first leading edge cooling ducts plus the number of second leading edge cooling ducts. This is, however, not a mandatory feature. In still other words, the leading edge section of the wall of the body may be more densely populated with cooling ducts than the side wall section. In turn, the leading edge region which is exposed to higher temperatures and at the same time a potentially higher heat transfer coefficient with a fluid flowing around the body, when compared to the side wall regions, for instance due to the stagnation point effects present at the leading edge, is provided with comparatively larger number of cooling ducts, and hence more intense cooling of the leading edge section of the wall of the body is effected.

It should be noted, though, that embodiments are conceivable within the scope of the present disclosure wherein the total number of leading edge cooling ducts equals or is lower than the number of side wall cooling ducts provided in any of the side wall section.

Likewise, in another aspect, and to achieve said effect, the method as set forth in the present document comprises providing a first multitude of leading edge coolant flows, providing a second multitude of side wall coolant flows within a side wall structure provided on at least one of the first and second side of the camber line, wherein the first multitude of leading edge coolant flows outnumbers the second multitude of side wall coolant flows provided within any of the side wall sections. In other words, the total number of leading edge coolant flows, that is, the sum of the number of first leading edge coolant flows plus the number of second leading edge coolant flows, is larger than the number of side wall coolant flows provided in any one of the first and second side wall sections.

The total number of side wall coolant flows provided in both side wall sections, that is, the sum of the number of side wall coolant flows provided in the first side wall section plus the number of side wall coolant flows provided in the second side wall section, may, however, in certain embodiments at least essentially equal the total number of leading edge coolant flows, that is, the sum of the number of first leading edge coolant flows plus the number of second leading edge coolant flows. This is, however, not a mandatory feature. In still other words, the leading edge section of the wall of the body may be more densely populated with coolant flows than any of the side wall sections, thus accounting for the relatively higher thermal loading of the leading edge section.

It should be noted, though, that embodiments are conceivable within the scope of the present disclosure wherein the total number of leading edge coolant flows equals or is lower than the number of side wall coolant flows provided in any of the side wall section.

It is noted that the side wall cooling ducts are in certain instances fluidly connected to the same coolant supply plenum as the leading edge cooling ducts, and the side wall coolant flows are in said instances provided from the same coolant supply plenum as the leading edge coolant flows. Thus, only one coolant supply plenum needs to be provided for leading edge cooling and for side wall cooling.

The inlet opening of a side wall cooling duct may provided at a location which, when considering a location thereof in the main flow direction of the body, is one of congruent with or upstream of the location of a discharge opening of a leading edge cooling duct provided on the same side of the camber line as the side wall cooling duct. Said main flow direction is to be understood to be oriented from the leading edge to the trailing edge and along and following an outer profile contour of the body. It will be appreciated that by virtue of this embodiment the entire extent of the body from the leading edge to the trailing edge may exhibit cooling ducts in the wall, thus providing for a superior cooling of the body, while at the same time accounting for the space requirement of the ducts inside the wall, or the space restrictions, respectively.

In further embodiments of the body the coolant supply plenum may be delimited on a downstream side by an inner wall extending between inner surfaces of the wall and across the camber line. Downstream, as mentioned before, refers to the flow direction of a fluid flowing around the body from the leading edge to the trailing edge.

As initially mentioned, the body may be a fuel injector device. At least one fuel supply plenum may accordingly be provided inside the body, and at least one fuel discharge duct may be provided inside the body and in fluid communication with the fuel supply plenum. The fuel discharge duct comprises a fuel discharge nozzle. The fuel discharge nozzle opens out onto an exterior of the body, such that fuel may be injected into a fluid flow in which the aerodynamic body is provided. In particular, at least one fuel discharge nozzle is provided at the trailing edge of the body such as to be located in a vortex area which is provided downstream the body, and for which the body may be specifically designed. By virtue of said vortexes, a thorough and intense intermixing of fuel and fluid flowing around the body is achieved. As further mentioned initially, said fluid may be partly expanded, still oxygen rich, flue gas from an upstream combustion stage. Further in particular, all fuel discharge nozzles may be arranged at the trailing edge or at least in a trailing edge region of the body. In further more particular instances, at least two distinct fuel supply plenums may be provided, each being fluidly connected to a specific fuel discharge nozzle and/or a specific set of fuel discharge nozzles. The fuel injector device may thus be applicable to selectively or jointly discharge two or more types of fuel, and/or to selectively discharge a type of fuel at different locations on the body and/or at the trailing edge of the body. One fuel supply plenum may be provided enclosing another fuel supply plenum. A liquid fuel, for instance fuel oil, plenum and a gaseous fuel plenum may be provided, and may selectively be charged with the respective fuel. Gaseous fuel plenums for different types of fuel gas may be provided. Accordingly, the fuel supply plenums may be fluidly connected to fuel discharge nozzles exhibiting different geometries and thus discharge properties, dependent, for instance, on the type of fuel and/or an intended fuel pressure and temperature. Fuel plenums being connected to fuel discharge nozzles at different specific locations, exhibiting different mixing properties with the externally flowing fluid may be provided and may be provided to be selectively supplied with fuel. Other embodiments and combinations of fuel supply plenums are conceivable within the framework of the present disclosure. However this is not a main focus of the subject matter set forth herein. It will become readily apparent to the skilled person which fuel supply plenums to provide inside the body to fulfil specific requirements.

Further, a shielding fluid plenum may be provided inside the body and may in particular be delimited by the inner surfaces of the side wall sections, the at least one fuel supply plenum being provided inside the shielding fluid plenum and enclosed by a fuel supply plenum wall. In particular at least one shielding fluid discharge duct is, in this specific embodiment, provided in fluid communication with the shielding fluid supply plenum and encircling a fuel discharge duct. In particular, a shielding fluid discharge nozzle may be provided in fluid communication with the shielding fluid supply plenum through a shielding fluid discharge duct and encircling a fuel discharge nozzle. The shielding fluid may for instance be compressed air bled from a compressor stage of a gas turbine engine which is equipped with the fuel injector device. It may in other instances be e.g. steam or any other compressed media. It will be readily appreciated that the shielding fluid needs to be provided at a pressure allowing it to be discharged through the shielding fluid discharge nozzle at the respective location and at a predetermined speed and/or mass flow. The shielding fluid may serve to isolate the discharged fuel against for instance a hot flue gas flow and thus to prevent the fuel from premature auto-ignition, for instance before it is completely admixed with an oxidant and/or upstream a predetermined combustion location downstream the fuel injector device, or the body, respectively. Reference is made in this respect for instance to EP 718 470, or respective other documents dealing with the concept of sequential combustion in gas turbine engines.

However, in other embodiments the shielding fluid may be provided from the same supply plenum as the coolant. It is understood that in these embodiments no dedicated coolant and shielding fluid supply plenums are provided, but a common plenum serves as a combined coolant and shielding fluid supply plenum and may be denominated as either one. It is understood that in this embodiment there is not necessarily an inner wall provided to delimit the plenum on a downstream side of the body.

In certain embodiments, fuel supply plenums and at least one shielding fluid supply plenum may be nested one inside the other, wherein in certain instances the shielding fluid supply plenum may be the outermost one, while a liquid fuel or piloting gas supply plenum may be the innermost one.

Further, the coolant supply plenum may be provided inside the body at an upstream end of the aerodynamic body, and be delimited by the leading edge wall section, while the fuel supply plenums and/or the shielding air plenum may be provided inside the body and downstream the coolant supply plenum, wherein upstream and downstream again refer to a direction from the leading edge to the trailing edge.

The trailing edge may be provided undulating along the span extent of the body, wherein in particular the leading edge is provided non-undulating along the span extent of the body. It is disclosed for instance in US 2012/0297787, how this serves to support admixing of fuel discharged at the trailing edge or at least in a trailing edge region of the body with a flow provided around the body. For instance, first fuel discharge nozzles may be provided at least essentially at inflection points of the undulating trailing edge, while second fuel discharge nozzles may be provided and distributed between said inflection points. More specifically, the first fuel discharge nozzles may be provided in fluid communication with a first fuel supply plenum provided inside the body, and the second fuel discharge nozzles may be provided in fluid communication with at least one second fuel supply plenum provided inside the body. The first nozzles may be for instance configured and adapted for discharging a liquid fuel, or a piloting gas flow, while the second fuel discharge nozzles may be configured and adapted to provide a premix fuel gas flow. It may be the case that the first fuel discharge nozzles are provided with larger cross sectional discharge areas than the second fuel discharge nozzles. Thus, due to the location/and or geometry of the fuel discharge nozzles the fuel discharged through the second fuel discharge nozzles may admix faster and/or more thoroughly with the flow around the body than the fuel discharged through the first fuel discharge nozzles..

It will be appreciated that the body, in particular when provided as a fuel injector device with various fluid supply plenums, and in certain embodiments with plenums nested inside each other, may exhibit a fairly complex geometry, with numerous undercuts and internal cavities. Manufacturing the body and in particular the fuel injector device, may thus prove expensive. Also, manufacturing the complex internal structure by casting with the required precision may prove an ambitious task. The body as herein described may thus be manufactured by an additive manufacturing process, in particular by a process referred to as 3D-printing or rapid prototyping, and more in particular by one of selective laser melting and selective electron beam melting. Such additive methods comprise layer by layer depositing a metal powder and selectively subjecting the metal powder to a solidification process, thus layer by layer building up a solid body. For instance, the process may comprise selectively melting and re-solidifying the layer of metal powder, thus building up a solid body at the locations in which the metal powder has been melted and re-solidified.

In other aspects, the aerodynamically shaped body exhibits a certain surface roughness of the inner surfaces delimiting the cooling ducts. To this extent, at least one of the cooling ducts and in particular each of said cooling ducts is provided with an internal surface roughness which may for instance be in a range 3 µm ≤ Rₐ ≤ 50 µm. As becomes apparent to the skilled person, such surface roughness enhances heat transfer between the material of the body around the cooling ducts and the coolant flow inside the cooling ducts. It is noted that such surface roughness may be provided as an inherent result of applying an additive manufacturing process as lined out above. It is further noted that the surface roughness may have different values and may be purposefully manufactured in a body manufactured by an additive manufacturing process.

Further a gas turbine engine is disclosed comprising at least one body as described above. In more specific embodiments, the gas turbine engine may comprise an aerodynamic body of the kind mentioned and provided as a fuel injector device. Said fuel injector device, and in particular a multitude of said fuel injector devices, may be provided in a hot gas path of the gas turbine engine, downstream a first combustor and a first turbine, in order to serve as fuel injectors for a sequential combustion gas turbine engine, as for instance disclosed in EP 718 470. In other instances, fuel injector devices which are provided with cooling arrangements according to the present disclosure may be provided downstream of a catalytic combustor stage. In other instances, airfoils of rotating blades and/or stationary vanes may be provided as aerodynamically shaped bodies according to the present disclosure. Said bodies, be it fuel injectors, airfoils or other, may be cooled according to a cooling method as set forth above.

It is understood that the features and embodiments disclosed above may be combined with each other. It will further be appreciated that further embodiments are conceivable within the scope of the present disclosure and the claimed subject matter which are obvious and apparent to the skilled person.

### BRIEF DESCRIPTION OF THE DRAWINGS

The subject matter of the present disclosure is now to be explained in more detail by means of selected exemplary embodiments shown in the accompanying drawings. The figures show
- Fig. 1: a plan view of a fuel injector device as an exemplary embodiment of an aerodynamically shaped body according to the teaching of the present disclosure;
- Fig. 2: a cross-sectional view of the embodiment of figure 1 taken along line A-A in figure 1;
- Fig. 3: a cross-sectional view of the embodiment of figure 1 taken along line B-B in figure 1;
- Fig. 4: a part of a cross section of the exemplarily shown embodiment taken along a camber line, or camber surface, respectively, of the body.

It is understood that the drawings are highly schematic, and details not required for instruction purposes may have been omitted for the ease of understanding and depiction. It is further understood that the drawings show only selected, illustrative embodiments, and embodiments not shown may still be well within the scope of the herein disclosed and/or claimed subject matter.

### EXEMPLARY MODES OF CARRYING OUT THE TEACHING OF THE PRESENT DISCLOSURE

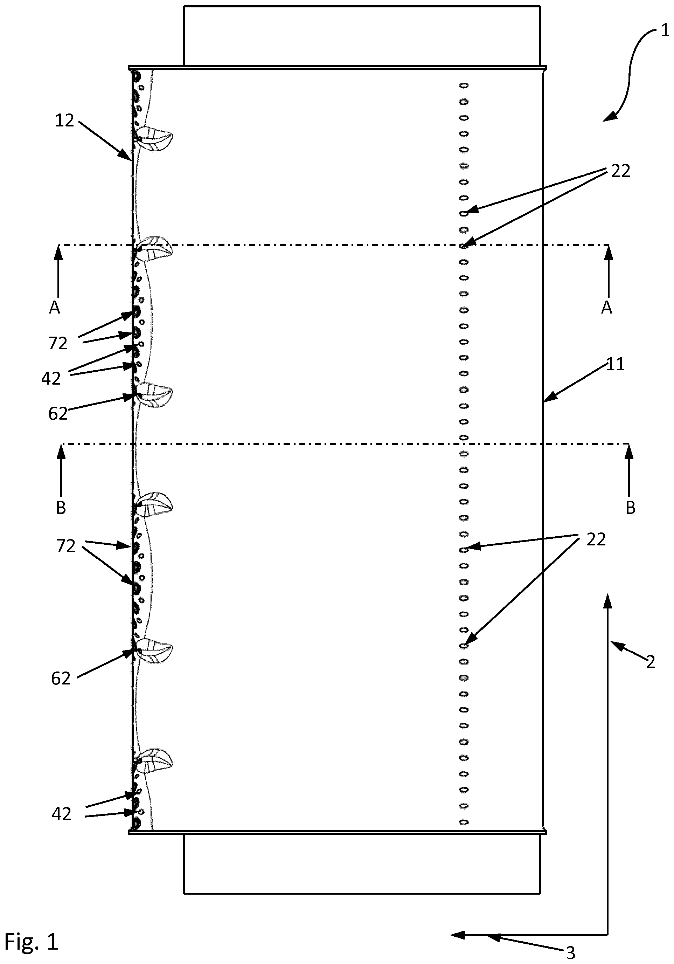

Fig. 1 depicts a plan view on a fuel injector device 1 provided as an aerodynamically shaped body. This type of fuel injector device is in essence known from US 2012/0297787. Details of the arrangement of fuel discharge nozzles and of the internal structure of the fuel injector device are described in more detail in EP Appl. No. 15161686 and EP Appl. No. 15161690 . Fuel injector device 1 comprises a leading edge 11 and a trailing edge 12. Furthermore, a span extent of the fuel injector device is indicated by the arrow at 2. A main flow direction of a fluid flow for which the body is intended is indicated at 3. Leading edge 11 extends straight along the span extent. Trailing edge 12 extends in an undulating manner along the span extent, as known from the art. Undulating, in this respect, means, as is readily appreciated that the extent of the trailing edge alternatingly runs on different sides of a surface span up by the span extent 2 and the main flow direction 3 of the aerodynamically shaped body. It should be noted, though, that it is not required that the span extent is characterized by a straight line, but may also be arcuate, and may for instance assume an elliptical or part-elliptical, oval or part-oval, circular or part-circular, parabolic, hyperbolic and so forth shape, and may extend at least essentially perpendicular to the main flow direction 3. Fuel discharge nozzles 62, only a part of which are denoted by reference numerals, are arranged at inflection points of the undulating trailing edge. Fuel discharge nozzles 62 are provided for discharging a liquid fuel. Fuel discharge nozzles 72, only a part of which are denoted by reference numerals, are arranged between inflection points of the undulating trailing edge. Fuel discharge nozzles 72 are provided for discharging gaseous fuel. Shielding air discharge ports, without reference numeral, are arranged encircling the fuel discharge nozzles. Furthermore, trailing edge coolant discharge openings 42, only a part of which are denoted by reference numerals, are arranged at the trailing edge 12, or in an area of the trailing edge, respectively. Further, coolant discharge openings 22, only a part of which are denoted by reference numerals, are arranged on an outer surface of the fuel injector device.

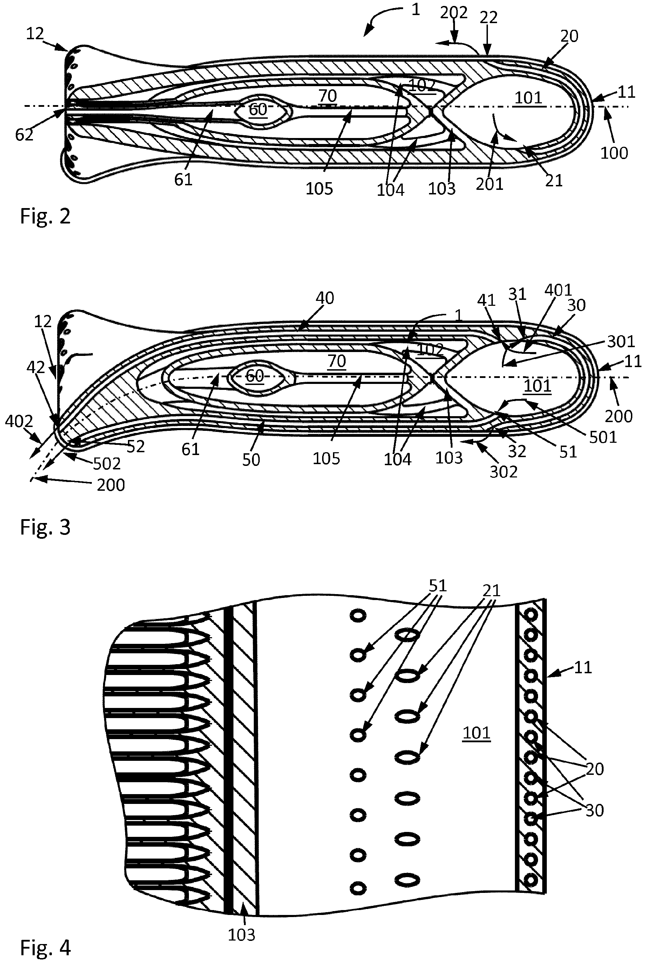

Reference is now made to the figures 2 and 3. Figure 2 shows a cross sectional aspects of the fuel injector device taken along line A-A. Figure 3 shows a cross sectional aspect of the fuel injector device taken along line B-B.

With reference to figure 2, the fuel injector device extends from the leading edge 11 with an aerodynamic profile on both sides of camber line 100. Within the body of the fuel injector device 1 a coolant supply plenum 101, a shielding air plenum 102, a liquid fuel plenum 60 and a gaseous fuel plenum 70 are provided. Coolant supply plenum 101 is delimited by a leading edge wall section of the body and further on a downstream side, wherein downstream is related to a main flow direction around the fuel injector device from the leading edge to the trailing edge, by an inner wall 103. Said inner wall extends between inner surfaces of the outer wall of fuel injector device 1. Side walls of the body are to be understood as walls forming the outer surface of the fuel injector device on both sides of the camber line and extending from a leading edge section of an outer wall structure of the fuel injector device towards the trailing edge. Shielding air plenum 102 is enclosed between said side walls and inner wall 103. Gaseous fuel plenum 70 is provided within shielding air plenum 102 and is enclosed by a plenum wall structure which is suspended by struts 104, which in turn are connected to inner wall 103. It is noted that embodiments are conceivable in which a combined coolant and shielding fluid supply plenum is provided. Inner wall 103 may in this embodiment be omitted. Further, within gaseous fuel plenum 70 the liquid fuel plenum 60 is provided. A delimiting wall of liquid fuel plenum 60 is suspended by strut 105 extending through fuel gas plenum 70. It is noted that shielding air plenum 102, gaseous fuel plenum 70, and liquid fuel plenum 60 extend at least essentially through the fuel injector device along the span direction. A multitude of struts 104 and 105 are staggered along the span extent of the device for supporting the encasements of the fuel plenums. Liquid fuel plenum 60 is in fluid communication with fuel discharge nozzle 62 through fuel discharge duct 61. Although not visible in the present depiction, it is understood that gaseous fuel plenum 70 is in fluid communication with fuel discharge nozzles 72 illustrated in figure 1. It will further be appreciated that shielding air plenum 102 is in fluid communication with shielding fluid discharge ports provided encircling liquid fuel discharge nozzles 62 and gaseous fuel discharge nozzles 72. For the sake of clarity of depiction, and due to the scale of the drawing, a detailed outline of the shielding fluid discharge arrangement is omitted, and moreover is of minor significance to the teaching provided in the present document. However, the skilled person will readily appreciate the arrangement of shielding fluid ducts in a fuel injector device of the kind shown. A leading edge wall section of the body extends from a first side of the camber line 100 to a second side of the camber line 100 over the leading edge 11. The leading edge wall section comprises an inner surface delimiting the coolant supply plenum 101 on an upstream side, and an outer surface. In the shown cross-sectional aspect, a leading edge cooling duct 20 is provided in the leading edge wall section. Leading edge cooling duct 20 extends from the inner surface of the leading edge wall section to the outer surface of the leading edge wall section. An inlet opening 21 of leading edge cooling duct 20 is provided in the inner surface of the leading edge wall section and on a first side of the camber line. A discharge opening 22 of leading edge cooling duct 20 is provided on the outer surface of the leading edge wall section and on a second side of the camber line. Leading edge cooling duct 20 extends inside the leading edge wall section from the first side of the camber line to the second side of the camber line and thereby crosses the camber line in a leading edge region. Leading edge cooling duct 20 closely follows the contour of the leading edge wall section in the cross-sectional aspect, and thereby provides a configuration which is referred to in the art as a near wall cooling duct. In particular, leading edge cooling duct 20 is provided parallel to a hot fluid exposed outer surface of the leading edge wall section. A coolant inlet flow 201 is provided to leading edge cooling duct 20 through inlet opening 21, is guided through leading edge cooling duct 20, passes through the leading edge wall section of the body, crosses camber line 100 in a leading edge region, and is discharged on the second side of the camber line and on the outer surface of body 1 as leading edge coolant discharge flow 202. While the thus provided leading edge coolant flow flows through leading edge cooling duct 20 it takes heat from the leading edge section of the wall and thus cools the leading edge section of the wall in the depicted cross-sectional aspect.

It will be readily appreciated that while a leading edge coolant flow flows through leading edge cooling duct 20 from the first side of the camber line to the second side of the camber line the temperature of the coolant flow rises. Consequently, the cooling effectiveness provided by a leading edge coolant flow flowing through leading edge cooling duct 20 decreases from the first side of the camber line to the second side of the camber line.

Thus, in a further cross-sectional aspect of the body a leading edge coolant arrangement as depicted in figure 3 is provided. The camber line 200 in the cross-sectional aspect of figure 3 is different from the camber line 100 of the cross-sectional aspect shown in figure 2. It will be appreciated that the camber line may differ from one cross-sectional aspect to another, for instance in the shown exemplary embodiment due to the undulation of the trailing edge. It may be said that all camber lines of all cross sections of the body 1, or fuel injector device, respectively, staggered along the span extend of the body, thus jointly form a camber surface. Thus, if reference is made in this document to a first side of a camber line and a second side of the camber line this is considered equivalent to a first side of a camber surface and a second side of a camber surface. Again, coolant supply plenum 101, shielding fluid plenum 102, liquid fuel plenum 60 and gaseous fuel plenum 70, which all extent through the fuel injector device 1 along the span direction, are visible. However, liquid fuel discharge duct 61 is not shown in a sectional view as is the case in figure 2, but is shown in the view on an outer wall of liquid fuel discharge duct 61. In this cross-sectional aspect, a second leading edge cooling duct 30 is provided in the leading edge section of the outer wall of the fuel injector device. Second leading edge cooling duct 30 is provided in fluid communication with coolant supply plenum 101 through an inlet opening 31 provided on the second side of camber line 200, and is provided with a coolant discharge opening 32 on the outer surface of the fuel injector device and arranged on the first side of camber line 200. Second leading edge cooling duct 30 extends inside the leading edge wall section between inlet opening 31 and discharge opening 32 from the second side of camber line 200 to the first side of camber line 200. As will be readily appreciated, second leading edge cooling duct 30 closely follows the contour of the leading edge wall section, and is in particular at least essentially parallel to an outer surface of the leading edge wall section, thus providing a near wall cooling arrangement for the leading edge wall section in the cross-sectional aspect shown in figure 3. A second leading edge coolant inlet flow 301 enters second leading edge cooling duct 30 through inlet opening 31 and is discharged on the outer surface of the wall of the body at discharge opening 32. The second leading edge coolant flow is thus provided essentially in a counterflow relationship to a leading edge coolant flow through leading edge cooling duct 20 shown in figure 2. While the second leading edge coolant flow flows through second leading edge cooling duct 30, from the second side of camber line 200 to the first side of camber line 200, it takes heat from the leading edge wall section, and the temperature of the second leading edge coolant flow rises from the second side of camber line 200 to the first side of camber line 200. Cooling provided by the second leading edge coolant flow is thus less effective on the first side of camber line 200 than on the second side of camber line 200. If now a leading edge cooling duct 20 as shown in figure 2, extending from an inlet opening on the first side of the respective camber line to a discharge opening on the second side of the respective camber line, and a second leading edge cooling duct 30 extending from an inlet opening on the second side of the respective camber line to a discharge opening on the first side of the respective camber line, are arranged offset from each other along the span extend of the body, cooling provided by a coolant flow through the first of said named cooling ducts is less effective on the second side of the camber line than on the first side of the camber line, while cooling provided by a coolant flow through the second of said named cooling ducts is less effective on the first side of the camber line than on the second side of the camber line. If the named two leading edge cooling ducts are arranged sufficiently close to each other, and further in view of the thermal conductivity of the material of the wall of the body, the differences in cooling effectiveness largely even out. Thus, in providing an alternating arrangement of first leading edge cooling ducts with an inlet opening provided on the first side of the camber line and a discharge opening provided on the second side of the camber line, and second leading edge cooling ducts with an inlet opening provided on the second side of the camber line and a discharge opening provided on the first side of the camber line along the span extent of the leading edge results in an overall uniform cooling of the leading edge section of the wall.

Further, in the cross-sectional aspect of figure 3 side wall cooling ducts 40 and 50 are provided. Side wall cooling duct 40 is provided in a side wall section on the second side of the camber line, while side wall cooling duct 50 is provided in a side wall section on the first side of the camber line. It should be noted that side wall cooling ducts provided in side wall sections on the first and second side of the camber line, or camber surface, respectively, are not necessarily provided in a common cross sectional plane as is the case in the depicted exemplary embodiment. Nor are the side wall cooling ducts necessarily provided in a common cross sectional plane with a leading edge cooling duct as is the case in the depicted exemplary embodiment. However, for the ease of depiction an embodiment has been chosen by way of example in which two side wall cooling ducts on different sides of the camber line are provided in a common cross sectional aspect with a leading edge cooling duct. Generally, however, it is emphasized that a side wall cooling duct needs not to be provided in a common cross sectional plane with a leading edge cooling duct, but may more generally be offset from a leading edge cooling duct along the span extent of the body. Also, it is not a requirement that a side wall cooling duct provided in the first side of the camber line, or camber surface, respectively, is arrange in the same cross section as a side wall cooling duct provided on the second side of the camber line or camber surface, respectively. It should thus be well appreciated that the shown embodiment in this respect is a very specific embodiment chosen merely to be able to depict a leading edge cooling duct and side wall cooling ducts in one figure.

Side wall cooling duct 40 is provided in a side wall section of the fuel injector device on the second side of camber line 200. Side wall cooling duct 40 is in fluid communication with coolant supply plenum 101 through inlet opening 41, and further opens out to the exterior of fuel injector device 1 at a side wall coolant discharge opening 42. Side wall coolant discharge opening 42 is provided at least essentially at the trailing edge or in a trailing edge section of the body. A sidewall coolant inlet flow 401 enters side wall cooling duct 40 through inlet opening 41 from coolant supply plenum 101, flows through side wall cooling duct 40, and is discharged as sidewall coolant discharge flow 402 at the trailing edge of fuel injector device 1. Side wall cooling duct 40 inside the side wall section follows the general contour of the outer surface of the fuel injector device 1, and is in particular arranged in parallel to the outer surface of the side wall. Thus, again a near wall cooling arrangement is provided by side wall cooling duct 40. Coolant flowing through side wall cooling duct 40 takes heat from the wall and thus cools the wall. Side wall cooling duct 50 is provided in a side wall section of fuel injector device 1 on the first side of camber line 200 and in fluid communication with coolant supply plenum 101 through inlet opening 51, and extends through the side wall to discharge opening 52 arranged in a trailing edge region, or at least essentially at the trailing edge. A side wall coolant inlet flow 501 enters side wall cooling duct 50 at inlet opening 51 and is discharged as sidewall coolant discharge flow 502 in the region of the trailing edge, or at least essentially at the trailing edge. As is seen, inlet opening 51 of side wall cooling duct 50 is arranged at least essentially at the same position, seen along the main flow direction of a flow around fuel injector device 1 from the leading edge to the trailing edge, as discharge opening 32 of second leading edge cooling duct 30, or even upstream thereof in the main flow direction. An inlet section of side wall cooling duct 50 overlaps with an outlet section of second leading edge cooling duct 30 in the main flow direction. As becomes apparent in connection with figure 2, inlet opening 41 of side wall cooling duct 40 is arranged at least essentially at the same position in the main flow direction as discharge opening 22 of leading edge cooling duct, or even upstream thereof in the main flow direction. Thus, an inlet region of site wall cooling duct 40 overlaps an outlet region of leading edge cooling duct 20 when seen along the span direction.

Summarizing, the cooling arrangement as depicted in the cross-sectional aspect of figure 2 provides more effective leading edge cooling on the first side of the camber line than on the second side of the camber line. The cooling arrangement as depicted in the cross-sectional aspect of figure 3 provides more effective leading edge cooling on the second side of the camber line than on the first side of the camber line. In providing leading edge cooling arrangements as shown in figures 2 and 3 alternatingly along the span extend of the aerodynamically shaped body, effective and largely homogeneous cooling of the leading edge is provided, provided that the alternatingly arranged leading edge cooling configurations are provided sufficiently close to each other. For instance, the material thickness provided between two adjacent leading edge cooling ducts is not more than five times and in particular not more than three times a cooling duct cross sectional dimension. It is within the skilled person's knowledge how to optimize the distance between two adjacent leading edge cooling ducts, dependent, for instance, on the thermal conductivity of the material of the body and the external thermal loading. Further, in arranging a multitude of side wall cooling ducts staggered along the span extent of the fuel injector device, with two adjacent side wall cooling ducts in any of the side wall sections being located sufficiently close to each other, provides for effective side wall cooling. It is within the skilled person's knowledge how to optimize the distance between two adjacent side wall cooling ducts, dependent, for instance, on the thermal conductivity of the material of the body and the external thermal loading. It is noted that generally more leading edge cooling ducts than side wall cooling ducts in each of the side walls, for a specific instance twice as many leading edge cooling ducts as sidewall cooling ducts in each of the side walls, are provided. This takes into account the higher thermal load of the leading edge section of the wall, which is for instance due to stagnation point effects and thinner boundary layers at the leading edge when compared to the side walls.

As noted above, it is not mandatory or a standing requirement that a leading edge cooling duct and a side wall cooling duct are provided in one and the same cross-sectional aspect. It is further noted, that the cooling ducts need not to be provided in one cross sectional plane of the body, but may also be provided obliquely.

Figure 4 shows a part of a sectional view of the above-described specific exemplary embodiment, wherein the cross section is taken along the camber line or camber surface. A row of inlet openings 51 of sidewall cooling ducts provided on the first side of the camber line are provided in an inner surface of the wall of the body. Further, a row of inlet openings 21 of first leading edge cooling ducts 20 are provided. First leading edge cooling ducts 20 and second leading edge cooling ducts 30 are provided alternatingly in the leading edge section of the wall. Each first leading edge cooling duct inlet 21 is provided in a common cross section with a first leading edge cooling duct 20. An inner surface of the wall of the body, delimiting the coolant supply Plenum 101 may be provided undulating, such that the overall wall thickness is larger at a leading edge cooling duct than between the leading edge cooling ducts. That is, the inner surface of the wall of the body, in the leading edge region thereof, exhibits embossments at the location of a leading edge cooling duct, or, in another aspect, depressions or recesses between neighboring leading edge cooling ducts. Thus, the material thickness of the wall may be minimized while providing sufficient space for the leading edge cooling ducts. This may bear cost-benefit in particular if the body is manufactured by an additive manufacturing process, in particular a process which may be referred to as 3-D-printing or rapid prototyping, for instance by a selective laser melting process or a selective electron beam melting process.

As will be appreciated, the complex geometry of this exemplary embodiment may be hard to be manufactured by a chip removing process or even a casting process. Thus, the exemplary shown fuel injector device may in particular be manufactured by an additive manufacturing process as repeatedly mentioned above. The surface roughness which is inherent to such manufacturing processes may serve to foster heat transfer between the wall and a coolant flow through a cooling duct provided inside the wall.

While the subject matter of the disclosure has been explained by means of exemplary embodiments, it is understood that these are in no way intended to limit the scope of the claimed invention. It will be appreciated that the claims cover embodiments not explicitly shown or disclosed herein, and embodiments deviating from those disclosed in the exemplary modes of carrying out the teaching of the present disclosure will still be covered by the claims.

### LIST OF REFERENCE NUMERALS

- 1: body, aerodynamically shaped body, fuel injector device
- 2: span extent of the body
- 3: main flow direction, downstream direction
- 11: leading edge
- 12: trailing edge
- 20: leading edge cooling duct, first leading edge cooling duct
- 21: inlet opening of leading edge cooling duct
- 22: discharge opening of leading edge cooling duct
- 30: leading edge cooling duct, second leading edge cooling duct
- 31: inlet opening of leading edge cooling duct
- 32: discharge opening of leading edge cooling duct
- 40: side wall cooling duct
- 41: inlet opening of side wall cooling duct
- 42: discharge opening of side wall cooling duct
- 50: side wall cooling duct
- 51: inlet opening of side wall cooling duct
- 52: discharge opening of side wall cooling duct
- 60: fuel supply plenum, liquid fuel supply plenum
- 61: fuel discharge duct, liquid fuel discharge duct
- 62: fuel discharge port, liquid fuel discharge nozzle
- 70: fuel supply plenum, gas fuel supply plenum
- 72: fuel discharge port, gas fuel discharge port
- 100: camber line
- 101: coolant supply plenum
- 102: shielding fluid supply plenum
- 103: inner wall
- 104: strut
- 105: strut
- 200: camber line
- 201: coolant supply flow, leading edge coolant supply flow
- 202: coolant discharge flow, leading edge coolant discharge flow
- 301: coolant supply flow, leading edge coolant supply flow
- 302: coolant discharge flow, leading edge coolant discharge flow
- 401: coolant supply flow, side wall coolant supply flow
- 402: coolant discharge flow, side wall coolant discharge flow
- 501: coolant supply flow, side wall coolant supply flow
- 502: coolant discharge flow, side wall coolant discharge flow

## Claims

1. An aerodynamically shaped body (1) for use in a hot fluid flow, the body (1) extending along a camber line (100, 200) from a leading edge (11) to a trailing edge (12), the body comprising at least one coolant supply plenum (101) provided inside the body, wherein the coolant supply plenum is delimited by a body wall, wherein the body wall extends from a first side of the camber line (100, 200) to a second side of the camber line (100, 200) and extends over the leading edge (11), thereby providing a leading edge wall section, the wall further comprising an inner surface facing the coolant supply plenum (101) and an outer surface, wherein at least one first leading edge cooling duct (20) extends from the inner surface to the outer surface and is in fluid communication with the coolant supply plenum (101) through an inlet opening (21) and opens out onto the outer surface through a discharge opening (22),
the inlet opening (21) is provided on a first side of the camber line (100, 200), the discharge opening (22) is provided on a second side of the camber line (100, 200), and the leading edge cooling duct (20) is provided inside the wall and extending inside the wall from the first side of the camber line (100, 200) to the second side of the camber line (100, 200) and thereby crossing the camber line (100, 200) in a leading edge (11) region; and
a multitude of first (20) and second (30) leading edge cooling ducts are arranged alternatingly along a span extent (2) of the body;
the aerodynamically shaped body (1) being **characterized in that** an inner surface of the leading edge wall section is undulating along a span extent (2) of the body (1), wherein the location of an embossment corresponds to the location of a leading edge cooling duct (20).

2. The body (1) according to claim 1,**characterized in that** a second leading edge cooling duct (30) is provided in fluid communication with the coolant supply plenum (101) through an inlet opening (31) in the inner surface of the wall and opens out onto the outer surface through a discharge opening (32), wherein the inlet opening (31) is provided on the second side of the camber line (100, 200), the discharge opening (32) is provided on the first side of the camber line (100, 200), and the second leading edge cooling duct (30) is provided inside the wall and extending inside the wall from the second side of the camber line (100, 200) to the first side of the camber line (100, 200) and thereby crossing the camber line (100, 200) in a leading edge (11) region.

3. The body (1) according to any of the preceding claims, **characterized in that** the wall of the body (1) comprises a first side wall section provided on the first side of the camber line (100, 200), a second side wall section provided on the second side of the camber line (100, 200), each side wall section having an outer surface constituting a part of an outer surface of the body (1) and extending from the leading edge wall section to the trailing edge (12), a side wall cooling duct (40, 50) being provided in at least one of the first and second side wall sections, said side wall cooling duct (40, 50) being in fluid communication with the coolant supply plenum (101) through an inlet opening (41, 51) provided in an inner surface of the wall and extending to a discharge opening (42, 52) provided on an outer surface of the body, the discharge opening (42, 52) being located closer to the trailing edge (12) than the inlet opening (41,51), wherein in particular the side wall cooling duct (40, 50) comprises a section inside the side wall section at least essentially following an outer contour of the body (1).

4. The body (1) according to the preceding claim, **characterized in** comprising a first multitude of leading edge cooling ducts (20, 30) and a second multitude of side wall cooling ducts (40, 50), wherein the first multitude of leading edge cooling ducts outnumbers the second multitude of side wall cooling ducts provided within any of the first and second side wall sections.

5. The body (1) according to any of the preceding claims, **characterized in that** the trailing edge (12) is provided undulating along the span extent (2) of the body, and wherein in particular the leading edge (11) is provided non-undulating along the span extent (2) of the body.

6. The body (1) according to any of the preceding claims, **characterized in that** at least one of said cooling ducts (20, 30, 40, 50) and in particular each of said cooling ducts (20, 30, 40, 50) is provided with an internal surface roughness in a range 3 µm ≤ Ra ≤ 50 µm.

7. The body (1) according to any of the preceding claims, **characterized in that** it is manufactured by an additive manufacturing process, in particular by one of selective laser melting and selective electron beam melting.

8. A gas turbine engine comprising at least one body (1) as claimed in any of the preceding claims.

9. A method for cooling a body (1) provided in a hot fluid flow, the body extending along a camber line (100, 200) from a leading edge (11) to a trailing edge (12), a body wall being provided extending from a first side of the camber line (100, 200) to a second side of the camber line (100, 200) and extending over the camber line (100, 200) and providing a leading edge wall section of the body, the wall comprising an outer surface exposed to the hot fluid flow, the method comprising providing at least one first leading edge coolant flow and guiding the first leading edge coolant flow through the wall,
the body (1) comprising at least one coolant supply plenum (101) provided inside the body, wherein the coolant supply plenum is delimited by a body wall; the wall further comprising an inner surface facing the coolant supply plenum (101); wherein at least one first leading edge cooling duct (20) extends from the inner surface to the outer surface and is in fluid communication with the coolant supply plenum (101) through an inlet opening (21) and opens out onto the outer surface through a discharge opening (22); wherein a multitude of first (20) and second (30) leading edge cooling ducts are arranged alternatingly along a span extent (2) of the body;
the method being **characterized in that** the first leading edge coolant flow is guided inside the wall from the first side of the camber line (100, 200) to the second side of the camber line (100, 200) and thereby passes through the leading edge wall section of the body and crosses the camber line (100, 200) in a leading edge (11) region; wherein an inner surface of the leading edge wall section is undulating along a span extent (2) of the body (1), and wherein the location of an embossment corresponds to the location of a leading edge cooling duct (20, 30).

10. The method according to the preceding claim, **characterized in that** the first leading edge coolant flow is provided to a first leading edge cooling duct (20) through which the first leading edge coolant flow is guided within the wall from a coolant supply plenum (101) provided inside the body and is provided to the first leading edge cooling duct (20) on the first side of the camber line (100, 200) and the first leading edge coolant flow is discharged on the outer surface of the wall and on the second side of the camber line (100, 200).

11. The method according to any of the preceding method claims, **characterized in** providing at least one second leading edge coolant flow and guiding the second leading edge coolant flow through the wall from the second side of the camber line (100, 200) to the first side of the camber line (100, 200) and thereby passing through the leading edge wall section of the body and crossing the camber line (100, 200) in a leading edge (11) region, such that in particular the second leading edge coolant flow is provided at least essentially in a counterflow relationship to the first leading edge coolant flow, and wherein in particular the second leading edge coolant flow is provided within a second leading edge cooling duct (30), the second leading edge cooling duct (30) being offset from the first leading edge cooling duct (20) along a span extent (2) of the body.

12. The method according to any of the preceding method claims, **characterized in** providing a first side wall section of the body on the first side of the camber line (100, 200), providing a second side wall section of the body on the second side of the camber line (100, 200), each side wall section having an outer surface constituting a part of an outer surface of the body and extending from the leading edge (11) wall section to the trailing edge (12), providing at least one side wall coolant flow within at least one of said first and second side wall sections of the body and guiding the side wall coolant flow inside the side wall section in a downstream direction (3) of the body wherein the side wall coolant flow is provided through an inlet opening (41, 51) in the inner surface of the wall and is discharged on the outer surface of the wall, wherein the side wall coolant flow is discharged closer to the trailing edge (12) than the inlet location, and wherein in particular the side wall coolant flow is guided inside the side wall along a flow path at least essentially following an outer contour of the body.

13. The method according to the preceding claim, **characterized in** providing a first multitude of leading edge coolant flows, providing a second multitude of side wall coolant flows within a side wall structure provided on at least one of the first and second side of the camber line (100, 200), wherein the first multitude of leading edge coolant flows outnumbers the second multitude of side wall coolant flows provided within any of the side wall sections.

## Patentansprüche

1. Aerodynamisch geformter Körper (1) zur Verwendung in einer heißen Fluidströmung, wobei sich der Körper (1) entlang einer Skelettlinie (100, 200) von einer Vorderkante (11) zu einer Hinterkante (12) erstreckt, wobei der Körper wenigstens eine Kühlmittelzuführkammer (101) umfasst, die innerhalb des Körpers vorgesehen ist, wobei die Kühlmittelzuführkammer durch eine Körperwand begrenzt ist, wobei sich die Körperwand von einer ersten Seite der Skelettlinie (100, 200) zu einer zweiten Seite der Skelettlinie (100, 200) erstreckt und sich über die Vorderkante (11) erstreckt, wodurch ein Vorderkanten-Wandabschnitt bereitgestellt wird, wobei die Wand ferner eine innere Oberfläche, die der Kühlmittelzuführkammer (101) zugewandt ist, und eine äußere Oberfläche umfasst, wobei sich wenigstens ein erster Vorderkanten-Kühlkanal (20) von der inneren Oberfläche zu der äußeren Oberfläche erstreckt und durch eine Einlassöffnung (21) mit der Kühlmittelzuführkammer (101) in Fluidverbindung steht und durch eine Auslassöffnung (22) auf die äußere Oberfläche mündet,
wobei die Einlassöffnung (21) auf einer ersten Seite der Skelettlinie (100, 200) vorgesehen ist, die Auslassöffnung (22) auf einer zweiten Seite der Skelettlinie (100, 200) vorgesehen ist, und der Vorderkanten-Kühlkanal (20) innerhalb der Wand vorgesehen ist und sich innerhalb der Wand von der ersten Seite der Skelettlinie (100, 200) zu der zweiten Seite der Skelettlinie (100, 200) erstreckt und dadurch die Skelettlinie (100, 200) in einem Vorderkantenbereich (11) kreuzt; und
wobei eine Vielzahl von ersten (20) und zweiten (30) Vorderkanten-Kühlkanälen abwechselnd entlang einer Spannweitenerstreckung (2) des Körpers angeordnet sind;
wobei der aerodynamisch geformte Körper (1) **dadurch gekennzeichnet ist, dass** eine innere Oberfläche des Vorderkanten-Wandabschnitts entlang einer Spannweitenerstreckung (2) des Körpers (1) wellenförmig ist, wobei der Ort einer Erhebung dem Ort eines Vorderkanten-Kühlkanals (20) entspricht.

2. Körper (1) nach Anspruch 1, **dadurch gekennzeichnet, dass** ein zweiter Vorderkanten-Kühlkanal (30) in Fluidverbindung mit der Kühlmittelzuführkammer (101) durch eine Einlassöffnung (31) in der inneren Oberfläche der Wand vorgesehen ist und durch eine Auslassöffnung (32) auf die äußere Oberfläche mündet, wobei die Einlassöffnung (31) auf der zweiten Seite der Skelettlinie (100, 200) vorgesehen ist, die Auslassöffnung (32) auf der ersten Seite der Skelettlinie (100, 200) vorgesehen ist, und der zweite Vorderkanten-Kühlkanal (30) innerhalb der Wand vorgesehen ist und sich innerhalb der Wand von der zweiten Seite der Skelettlinie (100, 200) zu der ersten Seite der Skelettlinie (100, 200) erstreckt und dadurch die Skelettlinie (100, 200) in einem Vorderkantenbereich (11) kreuzt.

3. Körper (1) nach einem der vorangehenden Ansprüche,
**dadurch gekennzeichnet, dass** die Wand des Körpers (1) einen ersten Seitenwandabschnitt, der auf der ersten Seite der Skelettlinie (100, 200) vorgesehen ist, und einen zweiten Seitenwandabschnitt umfasst, der auf der zweiten Seite der Skelettlinie (100, 200) vorgesehen ist, wobei jeder Seitenwandabschnitt eine äußere Oberfläche aufweist, die einen Teil einer äußeren Oberfläche des Körpers (1) bildet und sich von dem Vorderkanten-Wandabschnitt zu der Hinterkante (12) erstreckt, wobei ein Seitenwand-Kühlkanal (40, 50) in wenigstens einem der ersten und zweiten Seitenwandabschnitte vorgesehen ist, wobei der Seitenwand-Kühlkanal (40, 50) durch eine Einlassöffnung (41, 51), die in einer inneren Oberfläche der Wand vorgesehen ist, mit der Kühlmittel-Zuführkammer (101) in Fluidverbindung steht und sich zu einer Auslassöffnung (42, 52) erstreckt, die an einer äußeren Oberfläche des Körpers vorgesehen ist, wobei die Auslassöffnung (42, 52) näher an der Hinterkante (12) angeordnet ist als die Einlassöffnung (41, 51), wobei insbesondere der Seitenwand-Kühlkanal (40, 50) einen Abschnitt innerhalb des Seitenwandabschnitts aufweist, der wenigstens im Wesentlichen einer Außenkontur des Körpers (1) folgt.

4. Körper (1) nach dem vorangehenden Anspruch, **dadurch gekennzeichnet, dass** er eine erste Vielzahl von Vorderkanten-Kühlkanälen (20, 30) und eine zweite Vielzahl von Seitenwand-Kühlkanälen (40, 50) aufweist, wobei die erste Vielzahl von Vorderkanten-Kühlkanälen größer ist als die zweite Vielzahl von Seitenwand-Kühlkanälen, die innerhalb irgendeines der ersten und zweiten Seitenwandabschnitte vorgesehen ist.

5. Körper (1) nach einem der vorangehenden Ansprüche,
**dadurch gekennzeichnet, dass** die Hinterkante (12) entlang der Spannweitenerstreckung (2) des Körpers wellenförmig vorgesehen ist, und wobei insbesondere die Vorderkante (11) entlang der Spannweitenerstreckung (2) des Körpers nicht wellenförmig vorgesehen ist.

6. Körper (1) nach einem der vorangehenden Ansprüche,
**dadurch gekennzeichnet, dass** wenigstens einer der Kühlkanäle (20, 30, 40, 50) und insbesondere jeder der Kühlkanäle (20, 30, 40, 50) mit einer Innenoberflächen-Rauheit in einem Bereich von 3 µm ≤ Ra ≤ 50 µm versehen ist.

7. Körper (1) nach einem der vorangehenden Ansprüche,
**dadurch gekennzeichnet, dass** er durch ein additives Fertigungsverfahren hergestellt ist, insbesondere durch eines von selektivem Laserschmelzen und selektivem Elektronenstrahlschmelzen.

8. Gasturbinenmaschine, die wenigstens einen Körper (1) nach einem der vorangehenden Ansprüche umfasst.

9. Verfahren zum Kühlen eines in einer heißen Fluidströmung vorgesehenen Körpers (1), wobei sich der Körper entlang einer Skelettlinie (100, 200) von einer Vorderkante (11) zu einer Hinterkante (12) erstreckt, wobei eine Körperwand vorgesehen ist, die sich von einer ersten Seite der Skelettlinie (100, 200) zu einer zweiten Seite der Skelettlinie (100, 200) erstreckt und sich über die Skelettlinie (100, 200) erstreckt und einen Vorderkanten-Wandabschnitt des Körpers bereitstellt, wobei die Wand eine äußere Oberfläche aufweist, die der heißen Fluidströmung ausgesetzt ist, und wobei das Verfahren das Bereitstellen wenigstens eines ersten Vorderkanten-Kühlmittelstroms und das Leiten des ersten Vorderkanten-Kühlmittelstroms durch die Wand umfasst,
wobei der Körper (1) wenigstens eine Kühlmittelzuführkammer (101) umfasst, die im Inneren des Körpers vorgesehen ist, wobei die Kühlmittelzuführkammer durch eine Körperwand begrenzt ist; wobei die Wand ferner eine innere Oberfläche umfasst, die der Kühlmittelzuführkammer (101) zugewandt ist; wobei sich wenigstens ein erster Vorderkanten-Kühlkanal (20) von der inneren Oberfläche zu der äußeren Oberfläche erstreckt und durch eine Einlassöffnung (21) mit der Kühlmittel-Zuführkammer (101) in Fluidverbindung steht und durch eine Auslassöffnung (22) auf die äußere Oberfläche mündet; wobei eine Vielzahl von ersten (20) und zweiten (30) Vorderkanten-Kühlkanälen abwechselnd entlang einer Spannweitenerstreckung (2) des Körpers angeordnet sind;
wobei das Verfahren **dadurch gekennzeichnet ist, dass** der erste Vorderkanten-Kühlmittelstrom innerhalb der Wand von der ersten Seite der Skelettlinie (100, 200) zu der zweiten Seite der Skelettlinie (100, 200) geführt wird und dabei durch den Vorderkanten-Wandabschnitt des Körpers hindurchgeht und die Skelettlinie (100, 200) in einem Vorderkantenbereich (11) kreuzt; wobei eine innere Oberfläche des Vorderkanten-Wandabschnitts entlang einer Spannweitenerstreckung (2) des Körpers (1) wellenförmig ist, und wobei der Ort einer Erhebung dem Ort eines Vorderkanten-Kühlkanals (20, 30) entspricht.

10. Verfahren nach dem vorangehenden Anspruch, **dadurch gekennzeichnet, dass** der erste Vorderkanten-Kühlmittelstrom von einer im Inneren des Körpers vorgesehenen Kühlmittelzuführkammer (101) einem ersten Vorderkanten-Kühlkanal (20), durch den der erste Vorderkanten-Kühlmittelstrom innerhalb der Wand geführt wird, zugeführt wird, und dem ersten Vorderkanten-Kühlkanal (20) auf der ersten Seite der Skelettlinie (100, 200) zugeführt wird, und wobei der erste Vorderkanten-Kühlmittelstrom auf der äußeren Oberfläche der Wand und auf der zweiten Seite der Skelettlinie (100, 200) abgeführt wird.

11. Verfahren nach einem der vorangehenden Verfahrensansprüche, **dadurch gekennzeichnet, dass** wenigstens ein zweiter Vorderkanten-Kühlmittelstrom bereitgestellt wird und der zweite Vorderkanten-Kühlmittelstrom von der zweiten Seite der Skelettlinie (100, 200) durch die Wand zu der ersten Seite der Skelettlinie (100, 200) geführt wird und dabei durch den Vorderkanten-Wandabschnitt des Körpers hindurchgeht und die Skelettlinie (100, 200) in einem Vorderkantenbereich (11) kreuzt, so dass insbesondere der zweite Vorderkanten-Kühlmittelstrom wenigstens im Wesentlichen gegenläufig zu dem ersten Vorderkanten-Kühlmittelstrom vorgesehen ist, wobei insbesondere der zweite Vorderkanten-Kühlmittelstrom innerhalb eines zweiten Vorderkanten-Kühlkanals (30) vorgesehen ist, und wobei der zweite Vorderkanten-Kühlkanal (30) gegenüber dem ersten Vorderkanten-Kühlkanal (20) entlang einer Spannweitenerstreckung (2) des Körpers versetzt ist.

12. Verfahren nach einem der vorangehenden Verfahrensansprüche, **dadurch gekennzeichnet, dass** ein erster Seitenwandabschnitt des Körpers auf der ersten Seite der Skelettlinie (100, 200) vorgesehen ist und ein zweiter Seitenwandabschnitt des Körpers auf der zweiten Seite der Skelettlinie (100, 200) vorgesehen ist, wobei jeder Seitenwandabschnitt eine äußere Oberfläche aufweist, die einen Teil einer äußeren Oberfläche des Körpers bildet und sich von dem Vorderkanten-Wandabschnitt (11) zu der Hinterkante (12) erstreckt, wobei wenigstens ein Seitenwand-Kühlmittelstrom innerhalb wenigstens eines der ersten und zweiten Seitenwandabschnitte des Körpers bereitgestellt wird und der Seitenwand-Kühlmittelstrom innerhalb des Seitenwandabschnitts in einer stromabwärtigen Richtung (3) des Körpers geführt wird, wobei der Seitenwand-Kühlmittelstrom durch eine Einlassöffnung (41, 51) in der inneren Oberfläche der Wand zugeführt wird und auf der äußeren Oberfläche der Wand abgeführt wird, wobei der Seitenwand-Kühlmittelstrom näher an der Hinterkante (12) als an der Einlassstelle abgeführt wird, und wobei insbesondere der Seitenwand-Kühlmittelstrom innerhalb der Seitenwand entlang eines Strömungspfades geführt wird, der wenigstens im Wesentlichen einer Außenkontur des Körpers folgt.

13. Verfahren nach dem vorangehenden Anspruch, **dadurch gekennzeichnet, dass** eine erste Vielzahl von Vorderkanten-Kühlmittelströmen bereitgestellt wird, eine zweite Vielzahl von Seitenwand-Kühlmittelströmen innerhalb einer Seitenwandstruktur bereitgestellt wird, die an wenigstens einer der ersten und der zweiten Seiten der Skelettlinie (100, 200) vorgesehen ist, wobei die erste Vielzahl von Vorderkanten-Kühlmittelströmen größer ist als die zweite Vielzahl von Seitenwand-Kühlmittelströmen, die innerhalb irgendeines der Seitenwandabschnitte vorgesehen ist.

## Revendications

1. Corps de forme aérodynamique (1) destiné à être utilisé dans un flux de fluide chaud, le corps (1) s'étendant suivant une ligne de cambrure (100, 200) à partir d'un bord d'attaque (11) vers un bord de fuite (12), le corps comprenant au moins une chambre de fourniture d'un fluide frigorigène (101) disposée à l'intérieur du corps, dans lequel la chambre de fourniture du fluide frigorigène est délimitée par une paroi du corps, dans lequel la paroi du corps s'étend à partir d'un premier côté de la ligne de cambrure (100, 200) vers un second côté de la ligne de cambrure (100, 200), et s'étend au-dessus du bord d'attaque (11), en fournissant de ce fait une section paroi du bord d'attaque, la paroi comprenant en outre une surface intérieure qui fait face à la chambre de fourniture du fluide frigorigène (101), et une surface extérieure, dans lequel au moins une première canalisation de refroidissement du bord d'attaque (20) s'étend à partir de la surface intérieure vers la surface extérieure, et est en communication de fluide avec la chambre de fourniture du fluide frigorigène (101) par l'intermédiaire d'une ouverture d'entrée (21), et s'ouvre sur la surface extérieure par l'intermédiaire d'une ouverture d'évacuation (22),
l'ouverture d'entrée (21) est disposée sur un premier côté de la ligne de cambrure (100, 200), l'ouverture d'évacuation (22) est disposée sur un second côté de la ligne de cambrure (100, 200), et la canalisation de refroidissement du bord d'attaque (20) est disposée à l'intérieur de la paroi, et s'étend à l'intérieur de la paroi à partir du premier côté de la ligne de cambrure (100, 200) vers le second côté de la ligne de cambrure (100, 200), en croisant de ce fait la ligne de cambrure (100, 200) dans une région du bord d'attaque (11) ; et
une multitude de premières (20) et secondes (30) canalisations de refroidissement du bord d'attaque, sont agencées de manière alternée le long d'une étendue de portée (2) du corps ;
le corps de forme aérodynamique (1) étant **caractérisé en ce que** qu'une surface intérieure de la section paroi du bord d'attaque ondule le long de l'étendue de portée (2) du corps (1), dans lequel l'emplacement d'un bossage correspond à l'emplacement d'une canalisation de refroidissement du bord d'attaque (20).

2. Corps (1) selon la revendication 1, **caractérisé en ce qu'**une seconde canalisation de refroidissement du bord d'attaque (30) est prévue en communication de fluide avec la chambre de fourniture du fluide frigorigène (101) par l'intermédiaire d'une ouverture d'entrée (31) dans la surface intérieure de la paroi, et s'ouvre sur la surface extérieure par l'intermédiaire d'une ouverture d'évacuation (32), dans lequel l'ouverture d'entrée (31) est disposée sur le second côté de la ligne de cambrure (100, 200), l'ouverture d'évacuation (32) est disposée sur le premier côté de la ligne de cambrure (100, 200), et la seconde canalisation de refroidissement du bord d'attaque (30) est disposée à l'intérieur de la paroi, et s'étend à l'intérieur de la paroi à partir du second côté de la ligne de cambrure (100, 200) vers le premier côté de la ligne de cambrure (100, 200), en croisant de ce fait la ligne de cambrure (100, 200) dans une région du bord d'attaque (11).

3. Corps (1) selon l'une quelconque des revendications précédentes, **caractérisé en ce que** la paroi du corps (1) comprend une première section paroi latérale disposée sur le premier côté de la ligne de cambrure (100, 200), une seconde section paroi latérale disposée sur le second côté de la ligne de cambrure (100, 200), chaque section paroi latérale présentant une surface extérieure qui constitue une partie d'une surface extérieure du corps (1), et qui s'étend à partir de la section paroi du bord d'attaque, vers le bord de fuite (12), une canalisation de refroidissement de la paroi latérale (40, 50) étant disposée dans l'une au moins des première et seconde sections parois latérales, ladite canalisation de refroidissement de la paroi latérale (40, 50) étant en communication de fluide avec la chambre de fourniture du fluide frigorigène (101) par l'intermédiaire d'une ouverture d'entrée (41, 51) disposée dans une surface intérieure de la paroi, et s'étendant vers une ouverture d'évacuation (42, 52) disposée sur une surface extérieure du corps, l'ouverture d'évacuation (42, 52) étant située plus près du bord de fuite (12) que l'ouverture d'entrée (41, 51), dans lequel, en particulier la canalisation de refroidissement de la paroi latérale (40, 50) comprend une section à l'intérieur de la section paroi latérale après, au moins sensiblement, le contour extérieur du corps (1).

4. Corps (1) selon la revendication précédente, **caractérisé en ce qu'**il comprend une première multitude de canalisations de refroidissement du bord d'attaque (20, 30), et une seconde multitude de canalisations de refroidissement de la paroi latérale (40, 50), dans lequel la première multitude de canalisations de refroidissement du bord d'attaque, est supérieure en nombre à la seconde multitude de canalisations de refroidissement de la paroi latérale disposées à l'intérieur de l'une quelconque des première et seconde sections parois latérales.

5. Corps (1) selon l'une quelconque des revendications précédentes, **caractérisé en ce que** le bord de fuite (12) est prévu de façon à onduler le long de l'étendue de portée (2) du corps, et dans lequel, en particulier, le bord d'attaque (11) est prévu de façon à ne pas onduler le long de l'étendue de portée (2) du corps.

6. Corps (1) selon l'une quelconque des revendications précédentes, **caractérisé en ce que** l'une au moins desdites canalisations de refroidissement (20, 30, 40, 50), et, en particulier, chacune desdites canalisations de refroidissement (20, 30, 40, 50), présente un état de surface intérieure qui se situe dans la plage 3 µm ≤ Ra ≤ 50 µm.

7. Corps (1) selon l'une quelconque des revendications précédentes, **caractérisé en ce qu'**il est fabriqué par un processus de fabrication additive, en particulier par l'une d'une fusion sélective par laser, et d'une fusion sélective par faisceau d'électrons.

8. Turbine à gaz comprenant au moins un corps (1) selon l'une quelconque des revendications précédentes.

9. Procédé destiné à refroidir un corps (1) disposé dans un flux de fluide chaud, le corps s'étendant suivant une ligne de cambrure (100, 200) à partir d'un bord d'attaque (11) vers un bord de fuite (12), une paroi du corps s'étendant à partir d'un premier côté de la ligne de cambrure (100, 200) vers un second côté de la ligne de cambrure (100, 200), et s'étendant au-dessus de la ligne de cambrure (100, 200), et fournissant une section paroi du bord d'attaque du corps, la paroi comprenant une surface extérieure exposée au flux de fluide chaud, le procédé comprenant les étapes consistant à fournir au moins un premier flux de fluide frigorigène du bord d'attaque, et à guider le premier fluide frigorigène du bord d'attaque à travers la paroi,
le corps (1) comprenant au moins une chambre de fourniture du fluide frigorigène (101) disposée à l'intérieur du corps, dans lequel la chambre de fourniture du fluide frigorigène est délimitée par une paroi du corps ;
la paroi comprenant en outre une surface intérieure qui fait face à la chambre de fourniture du fluide frigorigène (101) ;
dans lequel au moins une première canalisation de refroidissement du bord d'attaque (20) s'étend à partir de la surface intérieure vers la surface extérieure, et est en communication de fluide avec la chambre de fourniture du fluide frigorigène (101) par l'intermédiaire d'une ouverture d'entrée (21), et s'ouvre sur la surface extérieure par l'intermédiaire d'une ouverture d'évacuation (22) ;
dans lequel une multitude de premières (20) et secondes (30) canalisations de refroidissement du bord d'attaque, sont agencées de manière alternée le long d'une étendue de portée (2) du corps ;
le procédé étant **caractérisé en ce que** le premier flux de fluide frigorigène du bord d'attaque est guidé à l'intérieur de la paroi à partir du premier côté de la ligne de cambrure (100, 200) vers le second côté de la ligne de cambrure (100, 200), et passe de ce fait à travers la section paroi du bord d'attaque du corps, et croise la ligne de cambrure (100, 200) dans une région du bord d'attaque (11) ;
dans lequel une surface intérieure de la section paroi du bord d'attaque ondule le long de l'étendue de portée (2) du corps (1), et dans lequel l'emplacement d'un bossage correspond à l'emplacement d'une canalisation de refroidissement du bord d'attaque (20, 30).

10. Procédé selon la revendication précédente, **caractérisé en ce que** le premier flux de fluide frigorigène du bord d'attaque est fourni à une première canalisation de refroidissement du bord d'attaque (20) à travers laquelle le premier flux de fluide frigorigène du bord d'attaque est guidé à l'intérieur de la paroi à partir d'une chambre de fourniture du fluide frigorigène (101) disposée à l'intérieur du corps, et est fourni à la première canalisation de refroidissement du bord d'attaque (20) sur le premier côté de la ligne de cambrure (100, 200), et le premier flux de fluide frigorigène du bord d'attaque est évacué sur la surface extérieure de la paroi et sur le second côté de la ligne de cambrure (100, 200).

11. Procédé selon l'une quelconque des revendications précédentes de procédé, **caractérisé par** les étapes consistant à fournir au moins un second flux de fluide frigorigène du bord d'attaque, et à guider le second flux de fluide frigorigène du bord d'attaque à travers la paroi à partir du second côté de la ligne de cambrure (100, 200), vers le premier côté de la ligne de cambrure (100, 200), en passant de ce fait à travers la section paroi du bord d'attaque du corps, et en croisant la ligne de cambrure (100, 200) dans une région du bord d'attaque (11), de telle sorte, en particulier, que le second flux de fluide frigorigène du bord d'attaque soit fourni au moins sensiblement dans une relation à contre-courant du premier flux de fluide frigorigène du bord d'attaque, et dans lequel, en particulier, le second flux de fluide frigorigène du bord d'attaque est fourni dans une seconde canalisation de fluide frigorigène du bord d'attaque (30), la seconde canalisation de fluide frigorigène du bord d'attaque (30) étant décalée de la première canalisation de fluide frigorigène du bord d'attaque (20) le long de l'étendue de portée (2) du corps.

12. Procédé selon l'une quelconque des revendications précédentes de procédé, **caractérisé par** les étapes consistant à fournir une première section paroi latérale du corps sur le premier côté de la ligne de cambrure (100, 200), à fournir une seconde section paroi latérale du corps sur le second côté de la ligne de cambrure (100, 200), chaque section paroi latérale présentant une surface extérieure qui constitue une partie d'une surface extérieure du corps, et qui s'étend à partir de la section paroi du bord d'attaque (11) vers le bord de fuite (12), à fournir au moins un flux de fluide frigorigène de la paroi latérale dans l'une au moins desdites première et seconde sections parois latérales du corps, et à guider le fluide frigorigène de la paroi latérale à l'intérieur de la section paroi latérale dans une direction en aval (3) du corps, dans lequel le fluide frigorigène de la paroi latérale est fourni par l'intermédiaire d'une ouverture d'entrée (41, 51) dans la surface intérieure de la paroi, et est évacué sur la surface extérieure de la paroi, dans lequel le fluide frigorigène de la paroi latérale est évacué plus près du bord de fuite (12) que l'emplacement d'entrée, et dans lequel, en particulier le fluide frigorigène de la paroi latérale est guidé à l'intérieur de la paroi latérale le long d'un chemin de flux après, au moins sensiblement, le contour extérieur du corps.

13. Procédé selon la revendication précédente, **caractérisé par** les étapes consistant à fournir une première multitude de flux de fluide frigorigène du bord d'attaque, à fournir une seconde multitude de flux de fluide frigorigène de la paroi latérale à l'intérieur d'une structure de paroi latérale prévue sur l'un au moins des premier et second côtés de la ligne de cambrure (100, 200), dans lequel la première multitude de flux de fluide frigorigène du bord d'attaque, est supérieure en nombre à la seconde multitude de flux de fluide frigorigène de la paroi latérale disposée à l'intérieur de l'une quelconque des sections parois latérales.
